# EUROPÄISCHE PATENTANMELDUNG

(11) **EP 3 633 159 A1**
(43) Veröffentlichungstag der Anmeldung: **08.04.2020**
(21) Anmeldenummer: 19181376.5
(22) Anmeldetag: 19.06.2019
(51) Int. Cl.: F02B 39/10, F02B 37/04, F04D 25/06, H02K 7/18, F02C 6/12, H02K 1/28, F04D 29/05, H02K 7/00, F04D 29/26, F04C 29/00, F01D 5/02, F16D 1/06

(54) **ELEKTRISCHE ANTRIEBSMASCHINE FÜR EINEN VERDICHTER UND/ODER EINE TURBINE, TURBOLADER UND/ODER TURBINE**

(30) Priorität: 02.10.2018 DE 102018216918
(71) Anmelder: Robert Bosch GmbH, 70442 Stuttgart (DE)
(72) Erfinder: Baeuerle, Michael, 71735 Eberdingen (DE); Fruehschuetz, Thomas, 83607 Holzkirchen (DE); Cavalcanti, Dalton De Paula, 70499 Stuttgart (DE); Ferlinz, Linus, 53111 Bonn (DE); Glemser, Ralph, 74336 Brackenheim (DE); Auracher, Maximilian, 83737 Irschenberg (DE); Mayer, Joerg, 71554 Weissach I.T. (DE); Gottwald, Frank, 71287 Weissach (DE); Schepp, Rene, 71336 Waiblingen (DE)

(57) **Zusammenfassung**

Es wird eine elektrische Antriebsmaschine (12) für einen Verdichter (14) und/oder eine Turbine (16), insbesondere für einen Abgasturbolader (10) einer Brennkraftmaschine, vorgeschlagen. Die elektrische Antriebsmaschine (12) umfasst einen Stator (26), der zumindest eine mehrphasige Antriebswicklung (28) zur Erzeugung eines Antriebsmagnetfelds aufweist, und einen Rotor (30). Der Rotor (30) weist eine Rotorwelle (32) und einen Permanentmagneten (34) auf. Die Rotorwelle (32) ist zum Befestigen an einer Welle (20) des Verdichters (14) und/oder der Turbine (16) ausgebildet. Die Rotorwelle (32) weist mindestens einen ersten Abschnitt (36) und einen zweiten Abschnitt (38) auf. Der erste Abschnitt (36) weist ein Innengewinde (40) auf. Der zweite Abschnitt (38) ist hohl und weist einen Innendurchmesser (44) auf. Das Innengewinde (40) ist zum Greifen in ein Außengewinde (42) der Welle (20) des Verdichters (14) und/oder der Turbine (16) ausgebildet. Der Innendurchmesser (44) des zweiten Abschnitts (38) ist zum Ausbilden einer Übermaßpassung zwischen der Rotorwelle (32) und der Welle (20) des Verdichters (14) und/oder der Turbine (16) ausgebildet.

## Beschreibung

### Stand der Technik

Aus dem Stand der Technik sind verschiedene elektrische Antriebsmaschinen und Turbolader bekannt. So offenbart beispielsweise die DE 10 2014 210 451 A1 einen Turbolader mit einer integrierten elektrischen Antriebsmaschine. Turbolader, insbesondere Abgasturbolader, werden insbesondere im Kraftfahrzeugbau dazu genutzt, die Luftfüllung in Zylindern einer Brennkraftmaschine zu erhöhen, um die Leistung der Brennkraftmaschine zu steigern. Häufig werden dazu Abgasturbolader eingesetzt, die vom Abgasstrom der Brennkraftmaschine angetrieben werden.

Darüber hinaus ist es bekannt, einen Turbolader elektromotorisch zu unterstützen, sodass unabhängig von einem Abgasstrom der Brennkraftmaschine angesaugte Frischluft verdichtet und der Brennkraftmaschine mit erhöhtem Ladedruck zugeführt werden kann. Auch eine Kombination beider Varianten ist bereits bekannt. Dabei wird ein Abgasturbolader mit einer elektrischen Antriebsmaschine versehen, um die Welle des Abgasturboladers, auf welcher ein Verdichterrad sowie ein Turbinenrad drehfest angeordnet sind, anzutreiben. Hierdurch kann beispielsweise der ansonsten zeitlich verzögerte Ladedruckaufbau maßgeblich beschleunigt werden.

Eine derartige elektrische Antriebsmaschine weist üblicherweise einen Stator, der zumindest eine mehrphasige Antriebswicklung zur Erzeugung eines Antriebsmagnetfelds aufweist, und einen Rotor auf. Der Rotor weist einen Permanentmagneten auf und wird drehfest auf der Welle des Abgasturboladers angeordnet. Die Realisierung der elektromotorischen Unterstützung durch eine elektrische Antriebsmaschine hat den Vorteil, dass die motorische Unterstützung besonders bauraumsparend in den Turbolader integrierbar ist. Durch Bestromen der Phasen der Antriebswicklung mittels einer dafür vorgesehenen Leistungselektronik wird das drehende Antriebsmagnetfeld erzeugt, durch welches der durch die Welle drehbar gelagerte Rotor mit einem vorgebbaren Drehmoment angetrieben wird. Der Permanentmagnet wirkt dabei mit dem drehenden Magnetfeld zusammen.

Trotz der Vorteile der aus dem Stand der Technik bekannten elektrischen Antriebsmaschinen beinhalten diese noch Verbesserungspotenzial. So ist es eine Herausforderung, das Verdichterrad des Turboladers mit einer definierten Kraft axial vorzuspannen und den Rotor ideal zur Turboladerwelle auszurichten, um eine möglichst geringe Unwucht des Gesamtsystems zu erzeugen.

### Offenbarung der Erfindung

Es wird daher eine elektrische Antriebsmaschine vorgeschlagen, die die Nachteile bekannter elektrischer Antriebsmaschinen zumindest weitgehend vermeidet und die insbesondere ausgebildet ist, das Verdichterrad des Turboladers mit einer definierten Kraft axial vorzuspannen und den Rotor ideal zur Turboladerwelle auszurichten, um eine möglichst geringe Unwucht des Gesamtsystems zu erzeugen.

Eine erfindungsgemäße Elektrische Antriebsmaschine für einen Verdichter und/oder eine Turbine, insbesondere für einen Abgasturbolader einer Brennkraftmaschine, umfasst einen Stator, der zumindest eine mehrphasige Antriebswicklung zur Erzeugung eines Antriebsmagnetfelds aufweist, und einen Rotor. Der Rotor weist eine Rotorwelle und einen Permanentmagneten auf. Die Rotorwelle ist zum Befestigen an einer Welle des Verdichters und/oder der Turbine ausgebildet. Die Rotorwelle weist mindestens einen ersten Abschnitt und einen zweiten Abschnitt auf. Der erste Abschnitt weist ein Innengewinde auf. Der zweite Abschnitt ist hohl und weist einen Innendurchmesser auf. Das Innengewinde ist zum Greifen in ein Außengewinde der Welle des Verdichters und/oder der Turbine ausgebildet. Der Innendurchmesser des zweiten Abschnitts ist zum Ausbilden einer Übermaßpassung zwischen der Rotorwelle und der Welle des Verdichters und/oder der Turbine ausgebildet.

Die Übermaßpassung wird bevorzugt so gering wie technisch möglich ausgeführt aufgrund des zu erwartenden Drehmomentanstiegs bei der Montage des Rotors auf die Welle. Das Torsionsmoment steigt, je höher die Verpressung gewählt wird, und somit steigt auch die Belastung auf die Welle.

Der Rotor kann somit mittels einer Schraubverbindung an die Turboladerwelle angeschraubt und gleichzeitig mit einem zylindrischen Pressverband zur Wellenachse ausgerichtet werden. Auf diese Weise kann mittels des Rotors die axiale Vorspannung auf das Verdichterrad vorgenommen werden. Die bei herkömmlichen Turboladern zum Befestigen des Rotors benötigte Mutter kann entsprechend entfallen. Dadurch wird ein Bauteil eingespart, was wiederum das Gesamtgewicht die Turboladerwellenbaugruppe reduziert. Dies wiederum hat Vorteile bezüglich der Stabilität des Rotorlaufs, was eine Erhöhung der Lebensdauer der Lagerung des Turboladers bewirkt. In die Rotorwelle ist somit ein Innengewinde zum Aufbringen einer definierten Axialkraft integriert. Die Axialkraft ist notwendig, um das Verdichterrad des Turboladers bei hohen Drehzahlen lagerichtig zu fixieren, denn seine Breite schrumpft aufgrund der hohen Drehzahlen im Betrieb.

Bei einer Weiterbildung grenzt der erste Abschnitt an ein Ende der Rotorwelle an. Alternativ grenzt der zweite Abschnitt an ein Ende der Rotorwelle an. Nach bzw. vor dem Gewinde ist somit eine zylindrische Presspassung vorgesehen, die den Rotor zur Turboladerwelle zentriert.

Bei einer Weiterbildung grenzen der erste Abschnitt und der zweite Abschnitt in axialer Richtung der Rotorwelle aneinander an. Somit lässt sich die Rotorwelle kompakt gestalten.

Bei einer Weiterbildung weist der zweite Abschnitt eine axiale Länge auf, die mindestens einem Faktor 0,8 des Innendurchmessers entspricht. Der zweite Abschnitt kann insbesondere eine axiale Länge auf, die mindestens einem Faktor von 0,8 bis 2 des Innendurchmessers entspricht. Somit ist der Rotor ideal zur Wellenachse ausgerichtet und mit einer ausreichend dimensionierten Presspassung versehen, was sich positiv auf die Unwucht des Systems auswirkt. Der Rotor muss bei der Montage drehwinkelgesteuert angezogen werden, um die geforderte Axialkraft zu garantieren.

Bei einer Weiterbildung weist die Rotorwelle einen dritten Abschnitt auf, der eine axiale Aufnahmevertiefung aufweist. Der Permanentmagnet ist in der axialen Aufnahmevertiefung aufgenommen. Damit ist eine kompakte Anordnung des Permanentmagneten in der Rotorwelle angegeben. Der Permanentmagnet ist ausgebildet, mittels eines Magnetfeldes, das über den Stator induziert wird, den Turbolader elektrisch anzutreiben.

Bei einer Weiterbildung ist die axiale Aufnahmevertiefung mit einem Innendurchmesser zum Ausbilden einer Übermaßpassung zwischen der Rotorwelle und dem Permanentmagneten ausgebildet. Der Pressverband zwischen Magnet und hülsenförmiger Rotorwelle sollte ausreichend dimensioniert sein, damit er das notwendige Drehmoment und Drehzahl übertragen kann. Des Weiteren stellt der Pressverband eine Art Bandagierung bzw. Hülse für den Magneten dar, um diesen bei hohen Drehzahlen aufgrund der resultierenden Zentrifugalkraft und Umwelteinflüssen zu schützen.

Bei einer Weiterbildung ist der Permanentmagnet in axialer Richtung der Rotorwelle zwischen einem Abstützelement und einem Verschlusselement in der axialen Aufnahmevertiefung aufgenommen. Das Verschlusselement ist zum Verschließen der axialen Aufnahmevertiefung ausgebildet. Bei einem Presssitz ohne das Abstützelement und Verschlusselement können am Austritt der Hülse über den Magneten infolge von Stützwirkung höhere Fugenpressungen und Tangentialspannungen auftreten. Das Abstützelement und das Verschlusselement schützen den Magnet vor diesen hohen Drucküberhöhungen an den Kanten des Magnets.

Bei einer Weiterbildung ist das Verschlusselement mit der Rotorwelle stoffschlüssig verbunden. Bevorzugt ist das Verschlusselement mit der Rotorwelle verschweißt. Das Verschlusselement wird mit der hülsenförmigen Rotorwelle verschweißt und schützt somit den Magneten vor Korrosion. Die Schweißnaht soll zudem verhindern, dass sich die hülsenförmige Rotorwelle bei großen Drehzahlen trompetenförmig verformt und somit den Magneten axial nach außen schiebt. Die Schweißnaht kann axial oder radial angebracht werden.

Bei einer Weiterbildung sind das Abstützelement und/oder das Verschlusselement aus dem gleichen Material wie die Rotorwelle in dem dritten Abschnitt ausgebildet. Dadurch lassen sich die genannten Materialien gut verbinden und weisen auch identische Materialeigenschaften wie Verformbarkeit, Wärmeausdehnung usw. auf.

Bei einer Weiterbildung weist die Rotorwelle in der axialen Aufnahmevertiefung eine Schlüsselfläche zum Ansetzen eines Werkzeugschlüssels auf. Damit lässt die Rotorwelle in einfacher Weise an der Welle des Turboladers befestigen.

Bei einer Weiterbildung ist die Schlüsselfläche in der axialen Aufnahmevertiefung als Innensechskant oder Innen-Torx ausgebildet. Somit wird für die Montage der Rotorwelle an der Welle des Turboladers kein Spezialwerkzeug benötigt, was die Montage erleichtert.

Bei einer Weiterbildung ist die Schlüsselfläche in der axialen Aufnahmevertiefung in dem Verschlusselement ausgebildet. Somit ist die Schlüsselfläche gut zugänglich.

Bei einer Weiterbildung ist die Rotorwelle zumindest in dem dritten Abschnitt aus einem nicht-magnetischen Material hergestellt. Dadurch wird die magnetische Wechselwirkung zwischen Stator und Permanentmagnet nicht gestört.

Vorteilhafterweise weist die Rotorwelle in dem dritten Abschnitt eine geringe Wandstärke auf, da diese ebenfalls Einfluss auf den Magnetfluss hat und umso geringeren störenden Einfluss auf den Magnetfluss hat, je geringer die Wandstärke ist.

Bei einer Weiterbildung weist die Rotorwelle einen an die axiale Aufnahmevertiefung angrenzenden Freistich auf. Dies hat Vorteile für die Montage des Abstützelements. Des Weiteren bewirkt eine solche spezielle Innenkontur der Rotorwelle eine Spannungsreduzierung in der Rotorwelle und dem Permanentmagneten. Somit wird die Festigkeit und Lebensdauer des Rotors erhöht. Außerdem bewirkt ein solcher Freistich, das Gesamtgewicht und die Gesamtlänge des Rotors zu reduzieren. Die Radien eines solchen Freistichs sind abhängig von der Baugröße des Rotors. Je nach Durchmesser und maximaler Drehzahl des Magneten werden unterschiedliche Verpressungen benötigt und diese Verpressungen verursachen eine unterschiedliche Belastung auf die Hülse und Magnet. Kleinere Durchmesser des Permanentmagneten benötigen kleinere Verpressungen, so dass hier dann kleinere Radien realisierbar sind.

Bei einer Weiterbildung weist die Rotorwelle an einer Außenfläche eine Schlüsselfläche zum Ansetzen eines Werkzeugschlüssels auf. Damit ist die Schlüsselfläche gut von außen zugänglich, was die Montage der Rotorwelle an der Welle des Turboladers erleichtert.

Bei einer Weiterbildung ist die Schlüsselfläche zweiflach-, vierkant oder sechskant-förmig ausgebildet. Somit wird für die Montage der Rotorwelle an der Welle des Turboladers kein Spezialwerkzeug benötigt, was die Montage erleichtert.

Bei einer Weiterbildung weist die Rotorwelle an einer Außenfläche einen Befestigungsabschnitt zum Befestigen einer Spannzange auf. Somit wird für die Montage der Rotorwelle an der Welle des Turboladers kein Spezialwerkzeug benötigt, was die Montage erleichtert.

Bei einer Weiterbildung ist das Innengewinde ein Innenfeingewinde oder ein Innenregelgewinde. Für die Montage wird somit kein spezielles Gewinde benötigt. Ein Feingewinde weist gegenüber einem Regelgewinde einen Vorteil hinsichtlich der höheren Selbsthemmung auf.

Erfindungsgemäß wird weiterhin ein Verdichter und/oder Turbine, insbesondere Abgasturbolader, mit einem Gehäuse, einer in dem Gehäuse drehbar gelagerten Welle, auf welcher zumindest ein Verdichterrad oder Turbinenrad drehfest angeordnet ist, und mit einer elektrischen Antriebsmaschine nach einem der zuvor beschriebenen Ausbildungen auf, wobei die Rotorwelle an der Welle des Verdichters und/oder der Turbine befestigt ist.

Bei einer Weiterbildung ist die Rotorwelle an der Welle des Verdichters und/oder der Turbine derart befestigt, dass das Verdichterrad oder Turbinenrad axial vorgespannt ist. Die Axialkraft ist notwendig, um das Verdichterrad des Turboladers bei hohen Drehzahlen lagerichtig zu fixieren, denn seine axiale Länge schrumpft aufgrund der hohen Drehzahlen im Betrieb.

Unter einem Stator ist im Rahmen der vorliegenden Erfindung ein feststehendes Bauteil einer elektrischen Antriebsmaschine, wie beispielsweise einem Elektromotor, zu verstehen, das als gemeinsamer Kern für Induktionsspulen dient. Der Stator verfügt üblicherweise über ein kreisringförmiges Statorjoch sowie radial nach innen von dem Statorjoch vorstehende Statorzähne, die in Umfangsrichtung gesehen beabstandet voneinander gleichmäßig verteilt angeordnet sind. Die Statorzähne sind üblicherweise von einer mehrphasigen Antriebswicklung umwickelt, wobei durch Bestromen der Phasen der Antriebswicklung mittels einer dafür vorgesehenen Leistungselektronik das drehende Antriebsmagnetfeld erzeugt wird, durch welches der durch die Welle drehbar gelagerte Rotor mit einem vorgebbaren Drehmoment angetrieben wird.

Unter einem Rotor ist im Rahmen der vorliegenden Erfindung ein rotierendes Bauteil einer elektrischen Antriebsmaschine, wie beispielsweise einem Elektromotor, zu verstehen, das alternativ auch als Läufer bezeichnet wird. Der Rotor weist dabei zweckmäßigerweise zumindest einen Permanentmagneten auf, der mit dem drehenden Magnetfeld des Stators zusammenwirkt.

Unter einer Passung ist im Rahmen der vorliegenden Erfindung eine maßliche Beziehung zwischen zwei Bauteilen, die ohne Nacharbeit zusammenpassen sollen zu verstehen. Diese Bauteile haben an der Fügestelle dieselbe Kontur einmal als Innenform und einmal als Außenform. Beide Konturen haben das gleiche Nennmaß. Unterschiedlich sind die beiden Toleranzfelder, innerhalb derer das jeweilige bei der Fertigung entstehende Istmaß von Innenform und Außenform liegen muss.

Unter einer Übermaßpassung ist im Rahmen der vorliegenden Erfindung eine maßliche Beziehung zwischen zwei Bauteilen in Form einer Innenform und einer Außenform zu verstehen, bei der das Größtmaß einer Innenkontur der Außenform in jedem Fall kleiner als ein Kleinstmaß einer Außenkontur der Innenform ist.

Unter einem Regelgewinde ist im Rahmen der vorliegenden Erfindung ein standardisiertes Gewinde mit metrischen Abmessungen zu verstehen. Üblicherweise weist dieses einen 62° Flankenwinkel. Derartige Gewinde sind beispielsweise nach der DIN 13-1 genormt.

Unter einem Feingewinde ist im Rahmen der vorliegenden Erfindung ein Gewinde zu verstehen, das im Vergleich zum Regelgewinde ein engeres Gewindeprofil hat. Zur Unterscheidung wird es üblicherweise zusätzlich zum Außendurchmesser mit dem Maß seiner ebenfalls kleineren Steigung gekennzeichnet.

Unter einer Spannzange ist im Rahmen der vorliegenden Erfindung ein Spannmittel zu verstehen, um Werkstücke bzw. Werkzeuge mit hoher Genauigkeit schnell und kraftschlüssig aufzuspannen. Sie besteht aus einer außen kegelförmigen radial geschlitzten Hülse mit einer runden, mitunter auch quadratischen oder sechseckigen Bohrung definierter Größe. Zu einer Spannzange gehört eine Spannzangenaufnahme mit einem zur Spannzange passenden Innenkegel. Gespannt wird durch Anziehen einer Überwurfmutter, mit der die Spannzange in den Innenkegel der Spannzangenaufnahme gedrückt wird. Durch die Schlitzung der Spannzange wird die Bohrung in ihrem Innern gleichmäßig zusammengedrückt, wodurch das Werkstück oder Werkzeug kraftschlüssig festgehalten wird. Der Spannbereich einer Spannzange ist sehr gering, dadurch müssen für verschiedene Durchmesser Spannzangen mit entsprechenden Abmessungen vorgehalten werden. Spannzangen spannen blanke oder bearbeitete Teile schnell, fest und genau zentrisch.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
Figur 1 eine Schnittansicht eines Turboladers mit einer elektrischen Antriebsmaschine gemäß einer ersten Ausführungsform der vorliegenden Erfindung,
Figur 2A eine Schnittansicht des Turboladers gemäß der ersten Ausführungsform
Figur 2B eine vergrößerte Darstellung eines Details des Turboladers aus der Figur 2A,
Figur 3 eine teilweise Schnittansicht der elektrischen Antriebsmaschine,
Figur 4 eine Schnittansicht eines Turboladers mit einer elektrischen Antriebsmaschine gemäß einer zweiten Ausführungsform der vorliegenden Erfindung,
Figur 5 eine perspektivische Ansicht einer Rotorwelle gemäß einem ersten Ausführungsbeispiel,
Figur 6 eine perspektivische Ansicht einer Rotorwelle gemäß einem zweiten Ausführungsbeispiel,
Figur 7 eine perspektivische Ansicht einer Spannzange und
Figur 8 einen Schnittansicht einer Rotorwelle mit der Spannzange.

### Ausführungsformen der Erfindung

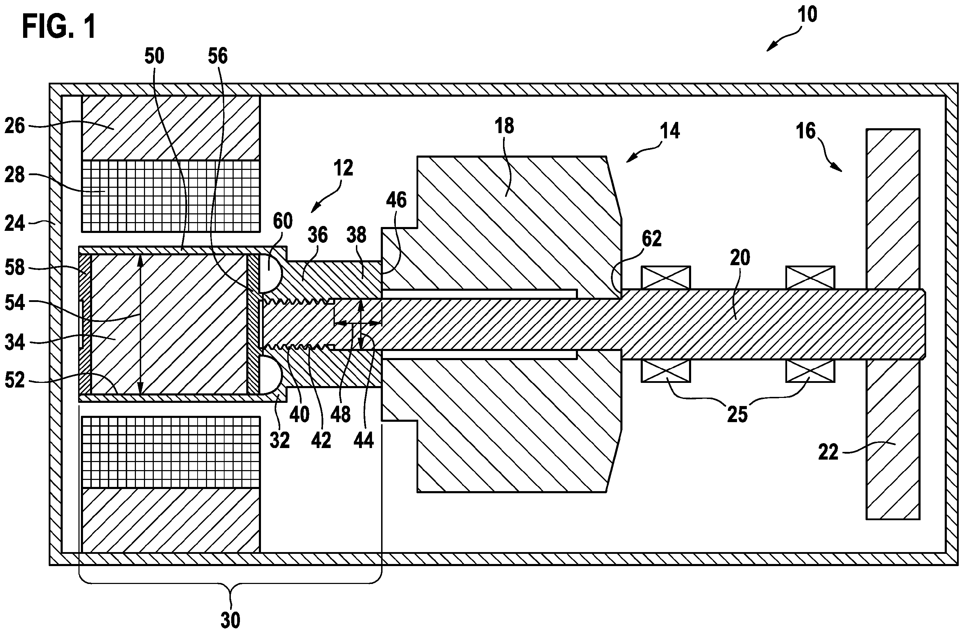

Figur 1 zeigt eine Längsschnittansicht eines Turboladers 10 mit einer elektrischen Antriebsmaschine 12 gemäß einer ersten Ausführungsform der vorliegenden Erfindung. Der Turbolader 10 ist als Abgasturbolader einer Brennkraftmaschine ausgebildet. Der Turbolader 10 weist einen Verdichter 14 sowie eine Turbine 16 auf. Der Verdichter 14 weist ein Verdichterrad 18 auf, das auf einer Welle 20 des Turboladers 10 drehfest angeordnet ist. Die Welle 20 ist selbst drehbar in einem Gehäuse 24 des Turboladers 10 gelagert. An einem von dem Verdichterrad 18 abgewandten Ende der Welle 20 ist außerdem ein Turbinenrad 22 der Turbine 16 drehfest mit der Welle 20 verbunden. Wenn das Turbinenrad 22 vom Abgas einer Brennkraftmaschine angeströmt und dadurch angetrieben wird, wird damit das Verdichterrad 18 ebenfalls in eine Drehbewegung versetzt, so dass dem Verdichterrad 18 zugeführte Frischluft verdichtet und der Brennkraftmaschine zugeführt wird.

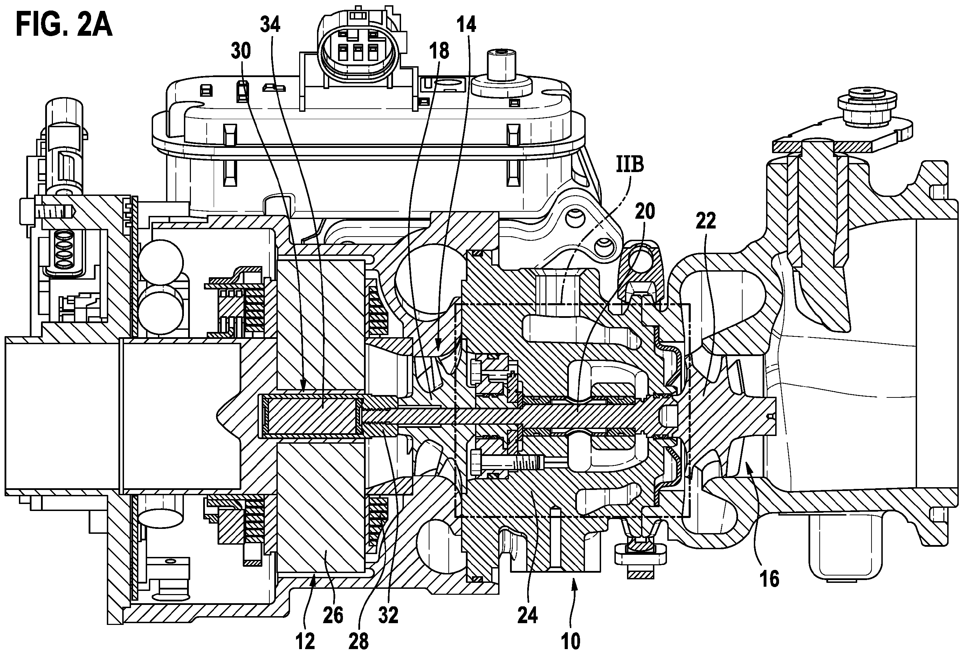

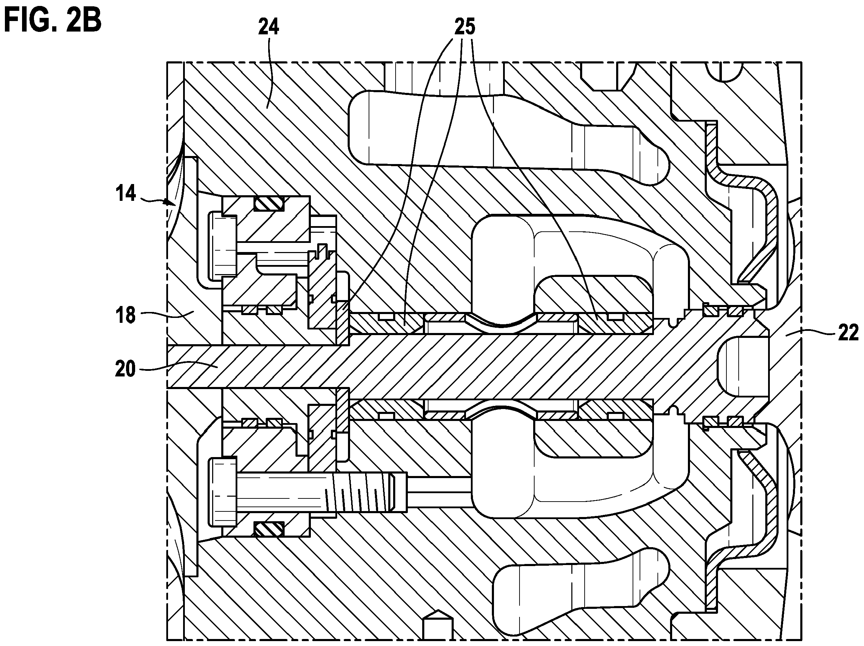

Figur 2A zeigt eine Schnittansicht des Turboladers 10 gemäß der ersten Ausführungsform. Figur 2B zeigt eine vergrößerte Darstellung eines Details des Turboladers 10 aus der Figur 2A. Das in Figur 2B dargestellte Detail ist in Figur 2A mit einer gestrichelten Linie angegeben. Die drehbare Lagerung der Welle 20 in dem Gehäuse 24 kann auf unterschiedliche Arten realisiert werden. Beispielsweise ist vorgesehen, dass die Welle 20 durch wenigstens zwei Lager 25 in dem Gehäuse 24 drehbar gelagert ist. Vorzugsweise sind als Lager 25 zwei Spezialgleitlager vorhanden. Zur axialen Lagerung der Welle 20 kann auch vorgesehen sein, dass eines der Lager als Axialgleitlager ausgebildet ist. Ein solches Axialgleitlager ist in Figur 2B als das linke von drei Lagern 25 dargestellt. Alternativ ist vorgesehen, dass ein oder mehrere Lager als Magnetlager ausgebildet ist/sind.

Damit insbesondere der Verdichter 14 unabhängig vom Abgasstrom der Brennkraftmaschine antreibbar ist, so dass jederzeit eine hohe Zylinderluftfüllung in den Zylindern der Brennkraftmaschine erreicht werden kann, ist vorliegend außerdem vorgesehen, dass der Turbolader 10 eine elektrische Antriebsmaschine 12 aufweist. Die elektrische Antriebsmaschine 12 ist vorliegend dem Verdichter 14 zugeordnet bzw. grenzt an diesen an, wie nachstehend ausführliche beschrieben wird.

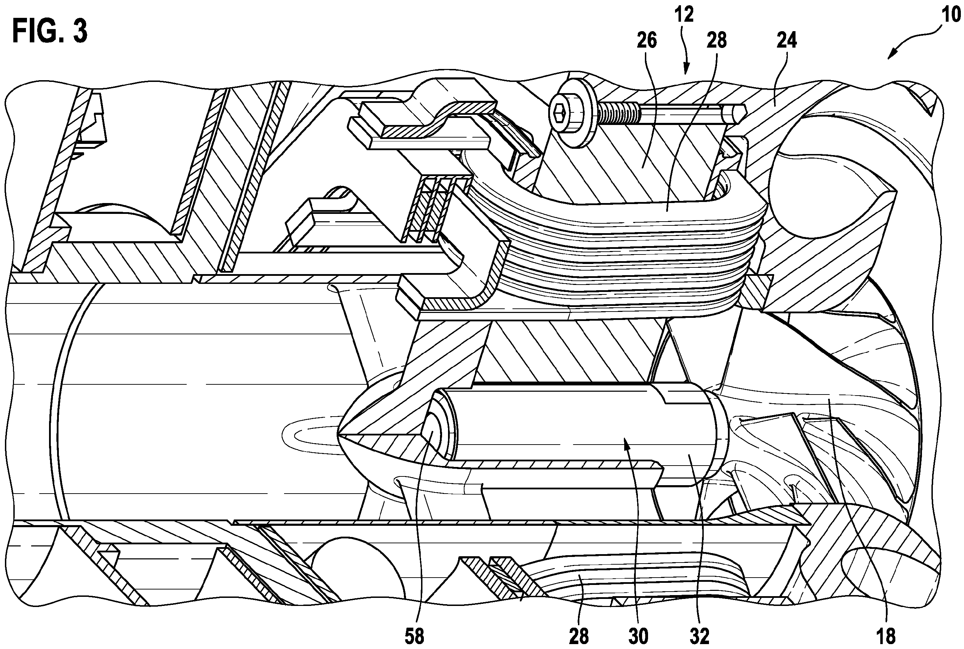

Figur 3 zeigt eine teilweise Schnittansicht der elektrischen Antriebsmaschine 12. Die elektrische Antriebsmaschine 12 weist einen Stator 26 auf. Der Stator 26 weist zumindest eine mehrphasige Antriebswicklung 28 zur Erzeugung eines Antriebsmagnetfelds auf. Die elektrische Antriebsmaschine 12 weist weiterhin einen Rotor 30 auf. Der Rotor 30 ist koaxial von dem Stator 26 umgeben.

Wie am besten in Figur 1 zu erkennen ist, weist der Rotor 30 eine Rotorwelle 32 und einen Permanentmagneten 34 auf. Die Rotorwelle 32 ist zum Befestigen an der Welle 20 des Verdichters 14 und/oder der Turbine 16 ausgebildet. Die Rotorwelle 32 weist mindestens einen ersten Abschnitt 36 und einen zweiten Abschnitt 38 auf. Der erste Abschnitt 36 und der zweite Abschnitt 38 grenzen in axialer Richtung der Rotorwelle 32 aneinander an. Der erste Abschnitt 38 weist ein Innengewinde 40 auf. Alternativ kann das Innengewinde 40 ein Innenregelgewinde sein. Das Innengewinde 40 ist ein Innenfeingewinde. Das Innengewinde 40 ist zum Greifen in ein Außengewinde 42 der Welle 20 des Verdichters 14 und/oder der Turbine 16 ausgebildet. Der zweite Abschnitt 38 ist hohl und weist einen Innendurchmesser 44 auf. Der Innendurchmesser 44 des zweiten Abschnitts 38 ist zum Ausbilden einer Übermaßpassung zwischen der Rotorwelle 32 und der Welle 20 des Verdichters 14 und/oder der Turbine 16 ausgebildet. In Figur 1 ist die elektrische Antriebsmaschine 12 mittels der Rotorwelle 32 auf der Welle 20 des Verdichters 14 und/oder der Turbine 16 befestigt. Bei der ersten Ausführungsform grenzt der zweite Abschnitt 38 an ein Ende 46 der Rotorwelle 32 an. Das Ende 46 ist im befestigten Zustand der Rotorwelle 32 dem Verdichterrad 18 zugewandt bzw. liegt an diesem an. Der zweite Abschnitt 38 weist eine axiale Länge 48 auf, die mindestens einem Faktor 0,8 des Innendurchmessers 44 entspricht. Mittels eines solchen Verhältnisses der axialen Länge 48 zum Innendurchmesser 44 lässt sich der Rotor 30 ideal zur Welle 20 ausrichten und mit einer ausreichend dimensionierten Presspassung versehen, was sich positiv auf die Unwucht des Systems auswirkt.

Die Rotorwelle 32 weist weiterhin einen dritten Abschnitt 50 auf. Der dritte Abschnitt befindet sich am dem Ende 46 gegenüberliegenden Ende der Rotorwelle 32. Der dritte Abschnitt 50 weist eine axiale Aufnahmevertiefung 52 auf. Der Permanentmagnet 34 ist in der axialen Aufnahmevertiefung 52 aufgenommen. Der Permanentmagnet 34 ist aus NdFeB oder SmCo hergestellt. Der Permanentmagnet 34 ist ausgebildet, mittels eines Magnetfeldes, das über den Stator induziert wird, den Turbolader elektrisch anzutreiben. Die axiale Aufnahmevertiefung 52 weist einen Innendurchmesser 54 auf, der zum Ausbilden einer Übermaßpassung zwischen der Rotorwelle 32 und dem Permanentmagneten 34 ausgebildet ist. Die Rotorwelle 32 umgibt den Permanentmagneten 34 somit hülsenförmig. Der Pressverband zwischen Permanentmagnet 34 und hülsenförmiger Rotorwelle sollte ausreichend dimensioniert sein, damit er das notwendige Drehmoment und Drehzahl übertragen kann. Ein solcher Pressverband stellt eine Art Bandagierung bzw. Hülse für den Permanentmagneten 34 dar, um diesen bei hohen Drehzahlen aufgrund der resultierenden Zentrifugalkraft und Umwelteinflüssen zu schützen. Der Permanentmagnet 34 ist in axialer Richtung der Rotorwelle 32 zwischen einem Abstützelement 56 und einem Verschlusselement 58 in der axialen Aufnahmevertiefung 52 aufgenommen. Folglich ist der Permanentmagnet 34 in axialer Richtung der Rotorwelle 32 gesehen sandwichartig zwischen dem Abstützelement 56 und dem Verschlusselement 58 eingespannt. Das Abstützelement 56 befindet sich dabei näher zu dem ersten Abschnitt 36 bzw. zweiten Abschnitt 38 als das Verschlusselement 58. Das Verschlusselement 58 ist zum Verschließen der axialen Aufnahmevertiefung 52 ausgebildet. So ist das Verschlusselement 58 mit der Rotorwelle 32 stoffschlüssig verbunden. Bevorzugt ist das Verschlusselement 58 mit der Rotorwelle 32 verschweißt. Die Schweißnaht kann dabei axial oder radial in das Verschlusselement 58 und die Rotorwelle 32 eingebracht sein. Dies schützt den Permanentmagneten 34 vor Korrosion. Das Abstützelement 56 ist bevorzugt aus dem gleichen Material wie die Rotorwelle 32 in dem dritten Abschnitt 50 ausgebildet. Alternativ oder zusätzlich ist das Verschlusselement 58 aus dem gleichen Material wie die Rotorwelle 32 in dem dritten Abschnitt 50 ausgebildet. Der Stator 26 umgibt den Rotor 30 im Bereich des dritten Abschnitts 50 der Rotorwelle 32. Um keinen störenden Einfluss auf einen Magnetfluss des Permanentmagneten 34 zu haben, ist die Rotorwelle 32 zumindest in dem dritten Abschnitt 50 aus einem nicht-magnetischen Material hergestellt. Die Rotorwelle 32 weist weiterhin einen an die axiale Aufnahmevertiefung 52 angrenzenden Freistich 60 auf. Dies hat Vorteile für die Montage des Abstützelements 56. Des Weiteren bewirkt eine solche spezielle Innenkontur der Rotorwelle 32 eine Spannungsreduzierung in der Rotorwelle 32 und dem Permanentmagneten 34. Somit wird die Festigkeit und Lebensdauer des Rotors 30 erhöht. Außerdem bewirkt ein solcher Freistich 60, das Gesamtgewicht und die Gesamtlänge des Rotors 30 zu reduzieren.

Der Rotor 30 wird an der Welle 20 des Abgasturboladers 10 befestigt, in dem die Rotorwelle 32 mittels des Innengewindes 40 auf die Welle 20 geschraubt wird. Wie in Figur 1 gezeigt, liegt das Verdichterrad 18 an einem Anschlag 62 der Welle 20 an. Durch das Schrauben wird eine axiale Kraft auf das Verdichterrad 18 aufgebracht. So wird die Rotorwelle 32 derart an der Welle 20 befestigt, dass das Verdichterrad 18 axial vorgespannt ist. So wird die Rotorwelle 32 je nach Baugröße mit einer axialen Kraft von 4 kN bis 13 kN auf die Welle 20 geschraubt, wie beispielsweise mit einer axialen Kraft von 13 kN. Die Übermaßpassung zwischen der Rotorwelle 32 und der Welle 20 in dem zweiten Abschnitt 38 der Rotorwelle 32 zentriert dabei den Rotor 30 zur Welle 20.

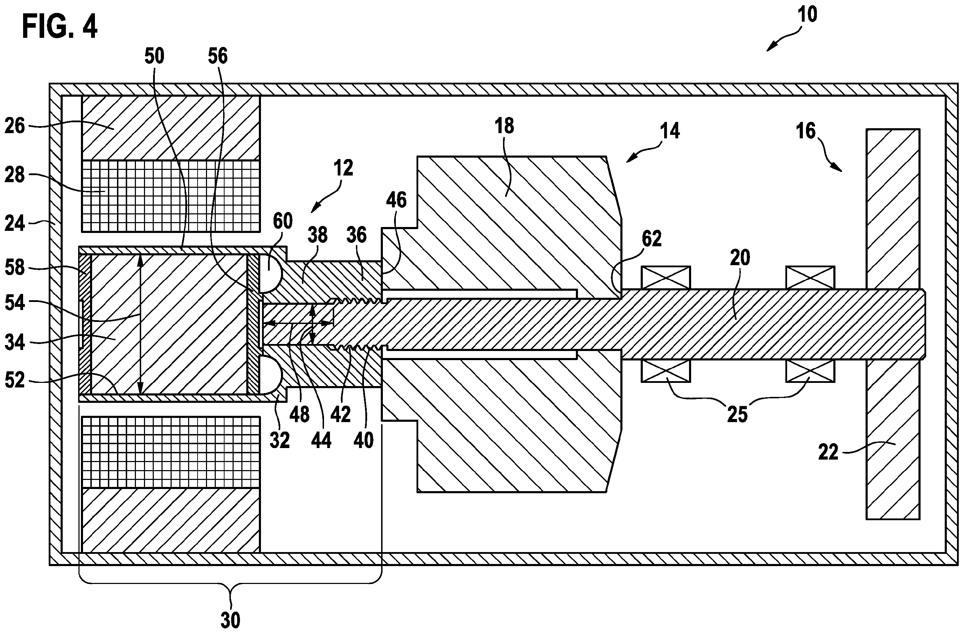

Figur 4 zeigt eine Schnittansicht eines Turboladers 10 mit einer elektrischen Antriebsmaschine 12 gemäß einer zweiten Ausführungsform der vorliegenden Erfindung. Nachstehend werden lediglich die Unterschiede zu der ersten Ausführungsform der elektrischen Antriebsmaschine 12 beschrieben und gleiche Bauteile sind mit gleichen Bezugszeichen versehen. Bei der zweiten Ausführungsform grenzt der erste Abschnitt 36 an das Ende 46 der Rotorwelle 32 an.

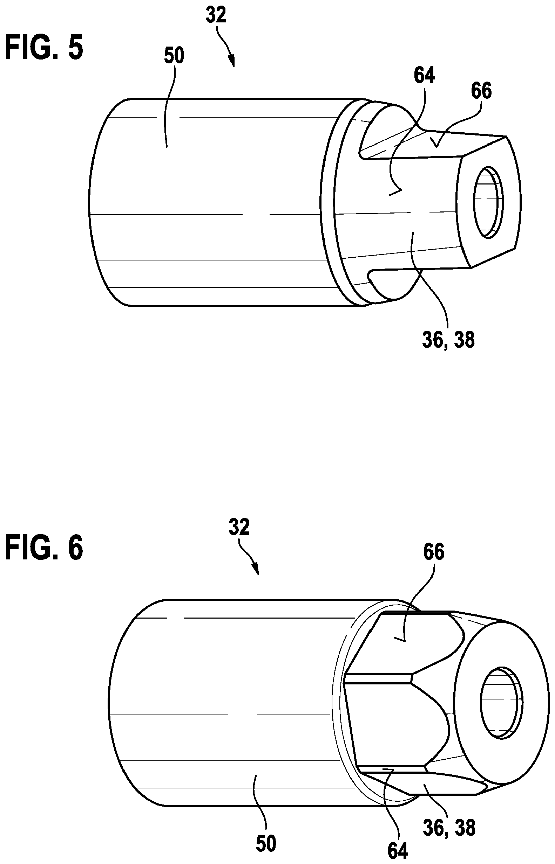

Figur 5 zeigt eine perspektivische Ansicht einer Rotorwelle 32 gemäß einem ersten Ausführungsbeispiel. Zum Erleichtern der Montage des Rotors 30 an der Welle 20 kann die Rotorwelle 32 eine Form aufweisen, die das Ansetzen eines Montagewerkzeugs erlaubt. Wie in Figur 5 gezeigt, weist die Rotorwelle 32 an einer Außenfläche 64 eine Schlüsselfläche 66 zum Ansetzen eines Werkzeugschlüssels auf. Die Schlüsselfläche 66 befindet sich an dem ersten Abschnitt 36 und dem zweiten Abschnitt 38. Bei dem in Figur 5 gezeigten Ausführungsbeispiel ist die Schlüsselfläche 66 zweiflach-förmig ausgebildet.

Figur 6 zeigt eine perspektivische Ansicht einer Rotorwelle 32 gemäß einem zweiten Ausführungsbeispiel. Nachstehend werden lediglich die Unterschiede zu dem ersten Ausführungsbeispiel der Rotorwelle 32 beschrieben und gleiche Bauteile sind mit gleichen Bezugszeichen versehen. Wie in Figur 6 gezeigt, kann die Schlüsselfläche 66 sechskant-förmig ausgebildet sein. Alternativ kann die Schlüsselfläche 66 vierkant-förmig ausgebildet sein.

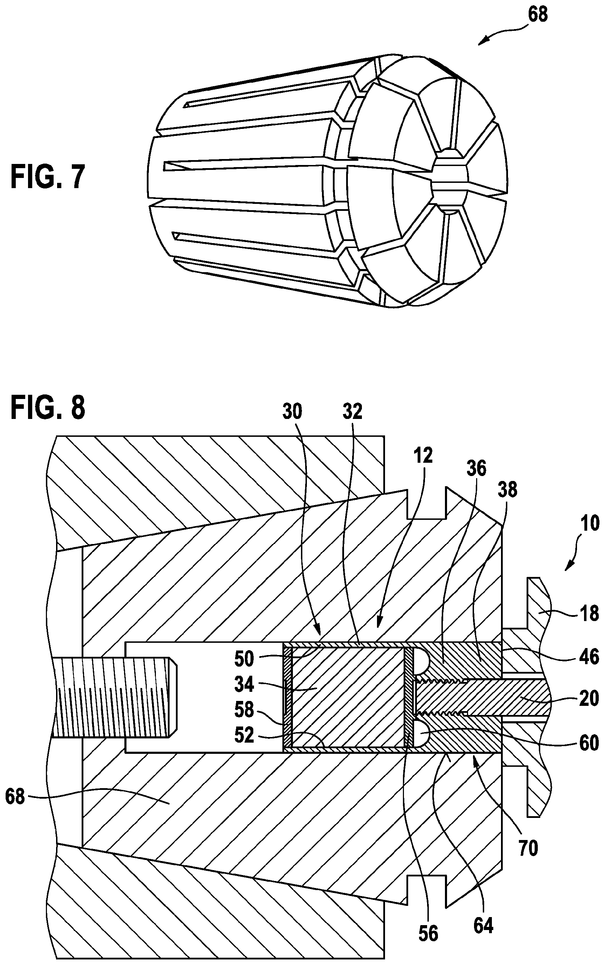

Figur 7 zeigt eine perspektivische Ansicht einer Spannzange 68 und Figur 8 zeigt eine Schnittansicht einer Rotorwelle 32 mit der Spannzange 68. Wie in Figur 8 zu erkennen ist, weist die Rotorwelle 32 an der Außenfläche 64 einen Befestigungsabschnitt 70 zum Befestigen der Spannzange 68 auf. Entsprechend kann der Rotor 30 mittels der Spannzange 68 an der Welle 20 befestigt werden.

Alternativ oder zusätzlich kann die Rotorwelle 32 in der axialen Aufnahmevertiefung 52 eine Schlüsselfläche zum Ansetzen eines Werkzeugschlüssels aufweisen. Die Schlüsselfläche ist in der axialen Aufnahmevertiefung 52 beispielsweise in dem Verschlusselement 56 ausgebildet Die Schlüsselfläche in der axialen Aufnahmevertiefung 52 ist beispielsweise als Innensechskant oder Innen-Torx ausgebildet.

## Patentansprüche

1. Elektrische Antriebsmaschine (12) für einen Verdichter (14) und/oder eine Turbine (16), insbesondere für einen Abgasturbolader (10) einer Brennkraftmaschine, umfassend
einen Stator (26), der zumindest eine mehrphasige Antriebswicklung (28) zur Erzeugung eines Antriebsmagnetfelds aufweist, und
einen Rotor (30), wobei der Rotor (30) eine Rotorwelle (32) und einen Permanentmagneten (34) aufweist, wobei die Rotorwelle (32) zum Befestigen an einer Welle (20) des Verdichters (14) und/oder der Turbine (16) ausgebildet ist, wobei die Rotorwelle (32) mindestens einen ersten Abschnitt (36) und einen zweiten Abschnitt (38) aufweist, wobei der erste Abschnitt (36) ein Innengewinde (40) aufweist, wobei der zweite Abschnitt (38) hohl ist und einen Innendurchmesser (44) aufweist, wobei das Innengewinde (40) zum Greifen in ein Außengewinde (42) der Welle (20) des Verdichters (14) und/oder der Turbine (16) ausgebildet ist, wobei der Innendurchmesser (44) des zweiten Abschnitts (38) zum Ausbilden einer Übermaßpassung zwischen der Rotorwelle (32) und der Welle (20) des Verdichters (14) und/oder der Turbine (16) ausgebildet ist.

2. Elektrische Antriebsmaschine (12) nach Anspruch 1, wobei der erste Abschnitt (36) an ein Ende (46) der Rotorwelle (32) angrenzt.

3. Elektrische Antriebsmaschine (12) nach Anspruch 1, wobei der zweite Abschnitt (38) an ein Ende (46) der Rotorwelle (32) angrenzt.

4. Elektrische Antriebsmaschine (12) nach einem der Ansprüche 1 bis 3, wobei der erste Abschnitt (36) und der zweite Abschnitt (38) in axialer Richtung der Rotorwelle (32) aneinander angrenzen.

5. Elektrische Antriebsmaschine (12) nach einem der Ansprüche 1 bis 4, wobei die Rotorwelle (32) einen dritten Abschnitt (50) aufweist, wobei der dritte Abschnitt (50) eine axiale Aufnahmevertiefung (52) aufweist, wobei der Permanentmagnet (34) in der axialen Aufnahmevertiefung (52) aufgenommen ist.

6. Elektrische Antriebsmaschine (12) nach Anspruch 5, wobei die axiale Aufnahmevertiefung (52) einen Innendurchmesser (54) zum Ausbilden einer Übermaßpassung zwischen der Rotorwelle (32) und dem Permanentmagneten (34) ausgebildet ist.

7. Elektrische Antriebsmaschine (12) nach Anspruch 5 oder 6, wobei der Permanentmagnet (34) in axialer Richtung der Rotorwelle (32) zwischen einem Abstützelement (56) und einem Verschlusselement (58) in der axialen Aufnahmevertiefung (52) aufgenommen ist, wobei das Verschlusselement (58) zum Verschließen der axialen Aufnahmevertiefung (52) ausgebildet ist.

8. Elektrische Antriebsmaschine (12) nach Anspruch 7, wobei das Verschlusselement (58) mit der Rotorwelle (32) stoffschlüssig verbunden und bevorzugt verschweißt ist.

9. Elektrische Antriebsmaschine (12) nach Anspruch 7 oder 8, wobei das Abstützelement (56) und/oder das Verschlusselement (58) aus dem gleichen Material wie die Rotorwelle (32) in dem dritten Abschnitt (50) ausgebildet sind.

10. Elektrische Antriebsmaschine (12) nach einem der Ansprüche 5 bis 9, wobei die Rotorwelle (32) zumindest in dem dritten Abschnitt (50) aus einem nicht-magnetischen Material hergestellt ist.

11. Elektrische Antriebsmaschine (12) nach einem der Ansprüche 5 bis 10, wobei die Rotorwelle (32) einen an die axiale Aufnahmevertiefung (52) angrenzenden Freistich (60) aufweist.
